(19) **Europäisches Patentamt / European Patent Office / Office européen des brevets**

(11) **EP 4 621 904 A1**

(12) **EUROPEAN PATENT APPLICATION**
published in accordance with Art. 153(4) EPC

(43) Date of publication:
24.09.2025  Bulletin 2025/39

(21) Application number: 23935720.5

(22) Date of filing: 12.12.2023

(51) International Patent Classification (IPC):
$H01M\ 10/0562^{(2010.01)}$  $H01M\ 10/052^{(2010.01)}$
$H01M\ 10/056^{(2010.01)}$  $H01M\ 10/0525^{(2010.01)}$

(52) Cooperative Patent Classification (CPC):
Y02E 60/10

(86) International application number:
PCT/CN2023/138094

(87) International publication number:
WO 2024/227350 (07.11.2024 Gazette 2024/45)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  04.05.2023  CN 202310485707

(71) Applicant: **Jiangsu Contemporary Amperex Technology Limited**
**Changzhou, Jiangsu 213300 (CN)**

(72) Inventors:
- **NING, Ziyang**
  **Changzhou, Jiangsu 213300 (CN)**
- **LIU, Chengyong**
  **Changzhou, Jiangsu 213300 (CN)**
- **HU, Bobing**
  **Changzhou, Jiangsu 213300 (CN)**
- **ZHONG, Chengbin**
  **Changzhou, Jiangsu 213300 (CN)**
- **YANG, Dunjie**
  **Changzhou, Jiangsu 213300 (CN)**

(74) Representative: **Kraus & Lederer PartGmbB**
**Thomas-Wimmer-Ring 15**
**80539 München (DE)**

(54) **SOLID-STATE ELECTROLYTE MEMBRANE AND PREPARATION METHOD THEREFOR, SOLID-STATE BATTERY, AND ELECTRIC DEVICE**

(57)    This application relates to a solid-state electrolyte membrane and a preparation method thereof, a solid-state battery, and an electric apparatus. The solid-state electrolyte membrane includes a solid-state electrolyte material layer and a fiber material layer disposed within the solid-state electrolyte material layer, where the solid-state electrolyte material layer includes an inorganic ceramic solid-state electrolyte material, and the fiber material layer includes ceramic fibers. The solid-state electrolyte membrane exhibits better mechanical properties, particularly fracture toughness, which can reduce membrane layer fracture.

FIG. 6

**Description**

**CROSS-REFERENCE TO RELATED APPLICATIONS**

This application refers to Chinese Patent Application No. 2023104857075, filed on May 4, 2023, and entitled "SOLID-STATE ELECTROLYTE MEMBRANE AND PREPARATION METHOD THEREOF, SOLID-STATE BATTERY, AND ELECTRIC APPARATUS", which is incorporated herein by reference in its entirety.

**TECHNICAL FIELD**

This application relates to the field of battery technologies, and in particular, to a solid-state electrolyte membrane and a preparation method thereof, a solid-state battery, and an electric apparatus.

**BACKGROUND**

In recent years, with the increasingly wide application use of batteries, batteries have been widely used in energy storage power systems such as hydroelectric power plants, thermal power plants, wind power plants, and solar power plants, as well as many other fields including electric tools, electric bicycles, electric motorcycles, electric vehicles, military equipment, aerospace, and the like. With the progress of battery research, solid-state batteries have emerged and, in recent years, have been regarded as batteries capable of succeeding lithium-ion batteries. Solid-state lithium battery technology replaces liquid electrolytes with solid-state electrolytes, which can significantly enhance the energy density of lithium batteries.

Currently, solid-state electrolytes can be classified into polymer-based solid-state electrolytes and inorganic ceramic solid-state electrolytes. Compared to polymer-based solid-state electrolytes, the fragile mechanical properties of inorganic ceramic solid-state electrolytes represent a core bottleneck in the application of this type of solid-state electrolyte.

**SUMMARY**

Based on this, this application provides a solid-state electrolyte membrane and a preparation method thereof, a solid-state battery, and an electric apparatus. The solid-state electrolyte membrane exhibits good mechanical properties.

According to a first aspect, this application provides a solid-state electrolyte membrane, including a solid-state electrolyte material layer and a fiber material layer disposed within the solid-state electrolyte material layer, where the solid-state electrolyte material layer includes an inorganic ceramic solid-state electrolyte material, and the fiber material layer includes ceramic fibers.

In some embodiments, the ceramic fibers are distributed in an interlaced manner; optionally, the ceramic fibers form a network structure; further optionally, the network structure is formed by weaving; and furthermore optionally, the network structure is parallel to a surface of the solid-state electrolyte membrane for contacting an electrode plate.

In some embodiments, a surface porosity of the fiber material layer is 50% to 90%; and optionally, the surface porosity of the fiber material layer is 65% to 75%.

In some embodiments, the ceramic fibers include one or more of silicon carbide fibers, silicon nitride fibers, boron nitride fibers, aluminum oxide fibers, and silicon dioxide fibers; and optionally, the ceramic fibers include one or more of silicon carbide fibers, aluminum oxide fibers, and silicon dioxide fibers.

In some embodiments, an aspect ratio of the ceramic fibers is greater than or equal to 5; and optionally, the aspect ratio of the ceramic fibers is 5 to 100.

In some embodiments, the inorganic ceramic solid-state electrolyte material includes a lithium-ion solid-state electrolyte material, a sodium-ion solid-state electrolyte material, or a potassium-ion solid-state electrolyte material.

In some embodiments, the solid-state electrolyte membrane has one or more of the following features shown in (1) to (3):

(1) A fracture toughness of the solid-state electrolyte membrane is greater than or equal to 0.25 MPa·m$^{1/2}$; and optionally, the fracture toughness of the solid-state electrolyte membrane is greater than or equal to 0.3 MPa·m$^{1/2}$;
(2) a surface resistance of the solid-state electrolyte membrane is less than or equal to 5 $\Omega \cdot cm^2$; and optionally, the surface resistance of the solid-state electrolyte membrane is less than or equal to 2 $\Omega \cdot cm^2$; and
(3) a thickness of the solid-state electrolyte membrane is less than or equal to 80 $\mu$m; and optionally, the thickness of the solid-state electrolyte membrane is less than or equal to 60 $\mu$m.

According to a second aspect, this application provides a method for preparing the solid-state electrolyte membrane according to the first aspect, including the following steps:

> preparing the fiber material layer using ceramic fibers; and
> coating the inorganic ceramic solid-state electrolyte material onto a surface of the fiber material layer and filling the same into the gaps of the fiber material layer, followed by forming treatment to prepare the solid-state electrolyte membrane.

In some embodiments, the step of preparing the fiber material layer includes:
interlacing the ceramic fibers to form the fiber material layer; optionally, the ceramic fibers form a network structure; further optionally, the network structure is formed by weaving; and furthermore optionally, the network structure is parallel to a surface of the solid-state electrolyte membrane for contacting the electrode plate.

In some embodiments, the step of preparing the solid-state electrolyte membrane includes:

> mixing the inorganic ceramic solid-state electrolyte material with a binder and a solvent to prepare an electrolyte slurry; or preparing an electrolyte powder using the inorganic ceramic solid-state electrolyte material; and
> performing the coating and filling using the electrolyte slurry or the electrolyte powder.

In some embodiments, the binder includes one or more of nitrile rubber (NBR), polyvinylidene fluoride (PVDF), polytetrafluoroethylene (PTFE), polyacrylic acid (PAA), polyvinyl alcohol (PVA), polyimide (PI), polyacrylonitrile (PAN), polyurethane (PU), carboxymethyl cellulose (CMC), cyclodextrin (CD), sodium alginate (SA), polysaccharide (Polysaccharide), and styrene butadiene rubber (SBR).

In some embodiments, the forming treatment step includes one or both of drying and pressing; and further optionally, the pressure of the pressing treatment is 10 MPa to 600 MPa.

According to a third aspect, this application provides a solid-state battery, including the solid-state electrolyte membrane according to the first aspect.

According to a fourth aspect, this application provides an electric apparatus, including the solid-state battery according to the third aspect.

The foregoing solid-state electrolyte membrane, by arranging a fiber material layer including ceramic fibers within the solid-state electrolyte material layer, can provide better fiber toughening effects when defects or fractures occur in the solid-state electrolyte membrane, thereby enhancing the mechanical properties of the solid-state electrolyte membrane, particularly its fracture toughness.

## DESCRIPTION OF DRAWINGS

To describe the technical solutions in the embodiments of this application more clearly, the following briefly describes the accompanying drawings required for describing the embodiments of this application. Apparently, the accompanying drawings in the following descriptions show merely some embodiments of this application, and persons of ordinary skill in the art may still derive other drawings from the accompanying drawings without creative efforts. In the accompanying drawings:

> FIG. 1 is a schematic diagram of a solid-state battery according to an embodiment of this application;
> FIG. 2 is a schematic diagram of a battery module according to an embodiment of this application;
> FIG. 3 is a schematic diagram of a battery pack according to an embodiment of this application;
> FIG. 4 is an exploded view of the battery pack according to an embodiment of this application shown in FIG. 3;
> FIG. 5 is a schematic diagram of an electric apparatus using a solid-state battery as a power source according to an embodiment of this application; and
> FIG. 6 is a structural diagram of a fiber material layer located within the solid-state electrolyte material layer in an embodiment of this application.

Reference numerals:
1: battery pack; 2: upper box body; 3: lower box body; 4: battery module; 5: solid-state battery; and 6: electric apparatus.

## DESCRIPTION OF EMBODIMENTS

The following specifically discloses embodiments of a solid-state electrolyte membrane and a preparation method thereof, a solid-state battery, and an electric apparatus in this application with appropriate reference to detailed descriptions of accompanying drawings. However, there may be cases in which unnecessary detailed descriptions are omitted. For example, detailed descriptions of well-known matters or repetitive descriptions of actually identical structures have been omitted. This is to prevent the following descriptions from becoming unnecessarily cumbersome, facilitating understanding of persons skilled in the art. In addition, the accompanying drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that special range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum limit values of a range are given as 1 and 2, and maximum limit values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, when a parameter is expressed as an integer greater than or equal to 2, this is equivalent to disclosure that the parameter is, for example, an integer: 2, 3, 4, 5, 6, 7, 8, 9, 10, 11, or 12.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all steps of this application may be performed sequentially or randomly, and in some examples, they are performed sequentially. For example, a method including steps (a) and (b) indicates that the method may include steps (a) and (b) performed sequentially or may include steps (b) and (a) performed sequentially. For example, the foregoing method may further include step (c), indicating that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application is inclusive or may be exclusive. For example, the terms "include" and "contain" can mean that other unlisted components may also be included or contained, or only listed components may be included or contained.

Unless otherwise specified, in this application, the term "or" is inclusive. For example, a phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In this application, the definition and testing method of fracture toughness are as follows:

Definition: Fracture toughness is a parameter describing the ability of a material to absorb strain energy before fracture occurs. Higher fracture toughness indicates a stronger resistance to crack propagation. Here, it also reflects the resistance of the solid-state electrolyte membrane to cracking and short circuits caused by dendrites. Fracture toughness can be tested using methods such as four-point bending tests or Vickers hardness tests. In this application, the fracture toughness is obtained by selecting the Vickers hardness test.

Testing method: The prepared solid-state electrolyte membrane is polished on a surface of a solid-state electrolyte sheet with sandpaper in an argon atmosphere, progressing from 800 grit to 2000 grit, 4000 grit, and 8000 grit, until an electrolyte surface exhibits mirror-like characteristics without obvious defects. Subsequently, a Vickers hardness tester is used to perform indentation tests on a polished surface. An appropriate load is applied to drive an indentation tester until radial cracks appear at four corners of the conical indentation. Based on an indentation load P, an extension length C of the radial cracks, a Young's modulus E, and a microhardness HV, the fracture toughness value $K_{IC}$ can be calculated using the formula below:

$$K_{IC} = 0.016 \left(\frac{E}{H_V}\right)^{\frac{1}{2}} \left(\frac{P}{C^{\frac{3}{2}}}\right) (MPa \cdot \sqrt{m})$$

In this application, the definition and testing method of a surface resistance of the solid-state electrolyte membrane are as follows:

Definition: Surface resistance depends on an ionic conductivity and thickness of the solid-state electrolyte membrane and is a comprehensive indicator for evaluating the properties and forming process of the solid-state electrolyte membrane. It also directly reflects the ohmic polarization level that the solid-state electrolyte membrane will bring to a battery in actual use. The surface resistance of the solid-state electrolyte membrane is the product of a resistivity $\rho$ (the reciprocal of ionic conductivity σ) and a thickness d of the solid-state electrolyte layer, as well as the product of an impedance R and an electrochemically active region A of the solid-state electrolyte membrane in testing. In practice, it is generally tested through electrochemical impedance spectroscopy and calculated to obtain a corresponding surface resistance.

Testing method: Taking a lithium-ion solid-state electrolyte as an example, the prepared solid-state electrolyte membrane is die-punched into a disc with a diameter of 10 millimeters (mm), and both sides of an electrolyte are uniformly coated with 100 nanometers (nm) of nickel through physical vapor deposition. The solid-state electrolyte membrane is then assembled into a pouch cell and connected to an electrochemical workstation via current collectors. Electrochemical impedance testing is performed on the electrolyte membrane at a bias voltage of 10 millivolts (mV) and a frequency range of 106 hertz (Hz) to 0.1 Hz. The Z' coordinate value of the point in a low-frequency segment of an electrochemical impedance spectrum curve, closest to the Z' axis from right to left, is taken as a resistance value R. The surface resistance of the electrolyte membrane can then be calculated using the formula below, with the unit being ohm·square centimeter (Ω·cm$^2$), where A is an area of the solid-state electrolyte membrane:

$$\Omega_{areal}=R*A.$$

Currently, due to the fragile mechanical properties of inorganic ceramic solid-state electrolytes, they are easily to fracture and easily generate dendrites and short circuits during deposition on a negative electrode side. In traditional methods, fibers are introduced into the solid-state electrolyte to enhance the mechanical properties of the solid-state electrolyte membrane, thereby reducing dendrite and short circuits caused by cracking. For example, some methods introduce polymer fast-ion conductor fibers into the solid-state electrolyte material. However, the introduction of such fibers does not provide sufficient mechanical reinforcement, and polymer fast-ion conductor fibers exhibit a high overpotential, causing lithium to preferentially occur within the polymer or at an interface between the polymer and the solid-state electrolyte, leading to dendrite formation and short circuits in solid-state batteries.

Based on this, some examples of this application provide a solid-state electrolyte membrane, including a solid-state electrolyte material layer and a fiber material layer disposed within the solid-state electrolyte material layer, where the solid-state electrolyte material layer includes an inorganic ceramic solid-state electrolyte material, and the fiber material layer includes ceramic fibers.

The foregoing solid-state electrolyte membrane, by arranging a fiber material layer including ceramic fibers within the solid-state electrolyte material layer, can provide better fiber toughening effects when defects or fractures occur in the solid-state electrolyte membrane, enhancing the mechanical properties of the solid-state electrolyte membrane, particularly its fracture toughness, thereby reducing the occurrence of fractures. Compared to a solid-state electrolyte membrane without a fiber material layer, the foregoing solid-state electrolyte membrane also exhibits low surface resistance and high ionic conductivity of the membrane layer.

In addition, since ceramic fibers themselves have no ion conduction capability, the phenomenon of fiber-induced deposition in the traditional methods is also reduced, thereby reducing the problems of dendrite and short circuits.

In some examples, the ceramic fibers are distributed in an interlaced manner. Given the mechanical property limitations of the inorganic ceramic solid-state electrolyte material itself, it is difficult to form a thin solid-state electrolyte layer, while the relatively low ionic conductivity requires the thickness of the solid-state electrolyte layer to be minimized to reduce surface resistance. Based on this, this application further arranges the ceramic fibers in the fiber material layer in an interlaced manner to form a supporting structure that provides support to the solid-state electrolyte material. This allows the solid-state electrolyte material to form a self-supporting electrolyte membrane by merely filling the fiber material layer during forming, achieving higher mechanical strength while significantly reducing a film-forming thickness of the solid-state electrolyte membrane to lower the surface resistance and enhance the ionic conductivity of the membrane layer.

It can be understood that "interlaced distribution" can be achieved by bonding the ceramic fibers together or by methods such as weaving.

In some examples, the ceramic fibers form a network structure. Further, the network structure is formed by weaving. By weaving, a better supporting effect can be achieved. It can be understood that the woven network structure is parallel to the surface of the solid-state electrolyte membrane for contacting an electrode plate.

In some examples, a surface porosity of the fiber material layer is 50% to 90%. Reasonably controlling the surface porosity of the fiber material layer can keep the surface resistance at a low level, enhancing ionic conductivity, optimizing the cycling performance of all-solid-state batteries, and providing better support. Specifically, the surface porosity of the fiber material layer includes, but is not limited to: 50%, 55%, 60%, 65%, 70%, 75%, 80%, 85%, 90%, or falls within a range between any two of these values. Further, the surface porosity of the fiber material layer is 65% to 75%.

In some examples, the ceramic fibers comprise one or more of silicon carbide fibers, silicon nitride fibers, boron nitride fibers, aluminum oxide fibers, and silicon dioxide fibers. Reasonably selecting the type of ceramic can better balance the different toughening effects brought by the varying strengths of the fiber materials and the affinity between the fiber material and the solid-state electrolyte material, reducing the problem of localized ionic conduction unevenness caused by fiber introduction. Further, the ceramic fibers comprise one or more of silicon carbide fibers, aluminum oxide fibers, and silicon dioxide fibers.

In some examples, an aspect ratio of the ceramic fibers is greater than or equal to 5. Further, the aspect ratio of the ceramic fibers is 5 to 100. A higher aspect ratio can improve the self-supporting performance of the fiber material layer and achieve the upper limit of porosity, while an excessively high aspect ratio increases the difficulty of ceramic fiber manufacturing and may cause aggregation of the ceramic fibers, increasing the manufacturing of a uniform self-supporting structure. Specifically, the aspect ratio of the ceramic fibers includes, but is not limited to: 5, 10, 15, 20, 25, 30, 50, 70, 100, or falls within a range between any two of these values.

In some examples, the inorganic ceramic solid-state electrolyte material includes a lithium-ion solid-state electrolyte material, a sodium-ion solid-state electrolyte material, or a potassium-ion solid-state electrolyte material. Further, the inorganic ceramic solid-state electrolyte material includes a sulfide-based solid-state electrolyte material.

Without limitation, the lithium-ion solid-state electrolyte includes one or more of LISICON-type solid-state electrolyte, NASICON-type lithium-ion solid-state electrolyte, Garnet-type solid-state electrolyte, LIPON-type solid-state electrolyte, Perovskite-type solid-state electrolyte, Anti-Perovskite-type lithium-ion solid-state electrolyte, Thio-LiSICON-type solid-state electrolyte, $Li_{10}GeP_2S_{12}$-type solid-state electrolyte, $(100\text{-}e)Li_2S\bullet e(F2)\bullet f(G2)$-type solid-state electrolyte, Argyrodite-type solid-state electrolyte, Halide-type solid-state electrolyte, and Hydride-type lithium-ion solid-state electrolyte, where in the $(100\text{-}e)Li_2S\bullet e(F2)\bullet f(G2)$-type solid-state electrolyte, $20 \leq e \leq 30$, $0 \leq f \leq 50$, F2 includes one or more of $B_2S_3$, $Al_2S_3$, $In_2S_3$, $SiS_2$, $GeS_2$, $SnS_2$, $P_2S_5$, $As_2S_3$, $Sb_2S_5$, $Bi_2S_3$, $WS_2$, and $MoS_2$, and G2 includes one or more of $B_2O_3$, $Al_2O_3$, $In_2O_3$, $SiO_2$, $GeO_2$, $SnO_2$, $P_2O_5$, $Sb_2O_5$, $Bi_2O_3$, $WO_2$, $WO_3$, $MoO_2$, $MoO_3$, $Fe_2O_3$, ZnO, MgO, CuO, CaO, LiN, $Li_2O$, LiF, LiCl, LiBr, and LiI.

The sodium-ion solid-state electrolyte includes one or more of NASICON-type sodium-ion solid-state electrolyte, Na-β-Alumina-type solid-state electrolyte, $Na_3PS_4$-type solid-state electrolyte, $Na_{11}Sn_2PS_{12}$-type solid-state electrolyte, Anti-perovskite-type solid-state electrolyte, and Hydride-type sodium-ion solid-state electrolyte.

The potassium-ion solid-state electrolyte includes one or more of β-Alumina-type potassium-ion solid-state electrolyte, Anti-Perovskite-type potassium-ion solid-state electrolyte, $K_2Fe_4O_7$-type solid-state electrolyte, and $KSi_2P_3$-type solid-state electrolyte.

As an example, the Garnet-type solid-state electrolyte includes $Li_{7\text{-}a}La_3Zr_{2\text{-}a}(A2)_aO_{12}$, where $0 \leq a < 1$; and A2 includes one or more of Sb, Nb, Ta, Te, and W.

The Thio-LiSICON-type solid-state electrolyte includes $Li_{3+b}(B2)_c(C2)_{1\text{-}c}(D2)_{4\text{-}d}(E2)_d$, where $-1 < b < 2$, $0 \leq c \leq 1$, $0 \leq d \leq 2$; B2 includes one or more of B, Al, In, Si, Ge, Sn, Ti, W, and Mo; C2 includes one or more of P, As, Sb, and Bi; D2 includes one or more of S and Se; and E2 includes one or more of F, Cl, Br, and I.

The Argyrodite-type solid-state electrolyte includes $Li_{6+g}(H2)_h(I2)_{1\text{-}h}(J2)_{5\text{-}i}(K2)_{1+i}$, where $-1 \leq g \leq 1$, $0 \leq h \leq 1$, $-1 < i \leq 1$; H2 includes one or more of B, Al, In, Si, Ge, Sn, Ti, W, and Mo; I2 includes one or more of P, As, Sb, and Bi; J2 represents one or more of S and Se; and K2 includes one or more of F, Cl, Br, and I.

The LISICON-type solid-state electrolyte includes $\gamma\text{-}Li_3PO_4$.

The NASICON-type lithium-ion solid-state electrolyte includes $Li_{1+j}(L2)_j(M2)_{2\text{-}j}(PO_4)_3$, where $0 \leq j < 1$; L2 includes one or more of Al, Cr, Ba, Fe, Sc, In, Lu, Y, and La; and M2 includes one or more of Ti and Ge.

The Perovskite-type solid-state electrolyte includes $Li_{3k}(N2)_{2/3\text{-}k}(Q2)O_3$, where $0.04 < k < 0.17$; N2 includes one or more of La, Sr, Ba, and Nd; and Q2 includes one or more of Al, Ti, and Ge.

The Anti-Perovskite-type lithium-ion solid-state electrolyte includes $Li_3OCl$.

The $Li_{10}GeP_2S_{12}$-type solid-state electrolyte includes $Li_{10+1}(R2)_{1+m}(S2)_{2\text{-}m}(T2)_{12\text{-}n}(U2)_n$, where $-2 < 1 < 2$, $0 \leq m \leq 2$, $0 \leq n \leq 2$; R2 includes one or more of B, Al, In, Si, Ge, Sn, Ti, W, and Mo; S2 includes one or more of P, As, Sb, and Bi; T2 includes one or more of S and Se; and U2 includes one or more of F, Cl, Br, and I.

The Halide-type solid-state electrolyte includes one or more of $Li_3(V2)(W2)_6$ and $Li_2Sc_{2/3}(W2)_4$, where V2 includes one or more of Y, Er, In, Sc, and Ga; and W2 includes one or more of F, Cl, Br, and I.

The Hydride-type lithium-ion solid-state electrolyte includes one or more of $LiBH_4$ and $pLi(CB_9H_{10})\bullet(1\text{-}p)Li(CB_{11}H_{12})$, where $0 < p < 1$.

The LIPON-type solid-state electrolyte includes $Li_xPO_yN_z$, and the like, where $(2y+3z\text{-}x=5, x \geq 1, y \geq 1, z \geq 0)$.

The NASICON-type sodium-ion solid-state electrolyte includes $Na_{1+t+2u}Zr_{2\text{-}u}(A3)_uP_{3\text{-}t}Si_tO_{12}$, where $0 \leq t \leq 3$, $0 \leq u \leq 1$; and A3 includes one or more of Zn, Mg, and Ca.

The Na-β-Alumina-type solid-state electrolyte includes one or more of $Na_2O\bullet(5\text{-}7)Al_2O_3$ and $Na_2O\bullet(8\text{-}11)Al_2O_3$.

The $Na_3PS_4$-type solid-state electrolyte includes $Na_{3+x}(B3)_v(C3)_{1\text{-}v}(D3)_{4\text{-}w}(E3)_w$, where $-1 < x < 2$, $0 \leq v \leq 1$, $0 \leq w \leq 2$; B3 includes one or more of B, Al, In, Si, Ge, Sn, Ti, W, and Mo; C3 includes one or more of P, As, Sb, and Bi; D3 includes one or more of S and Se; and E3 represents one or more of F, Cl, Br, and I.

The $Na_{11}Sn_2PS_{12}$-type solid-state electrolyte includes $Na_{11+(x1)}(F3)_{2\text{-}y}(G3)_{1+y}(H3)_{12\text{-}z}(J3)_z$, where $-1 < x1 < 1$, $0 \leq y \leq 2$, $0 \leq z \leq 2$; F3 includes one or more of B, Al, In, Si, Ge, Sn, Ti, W, and Mo; G3 includes one or more of P, As, Sb, and Bi; H3 includes one or more of S and Se; and J3 includes one or more of F, Cl, Br, and I.

The Anti-perovskite-type solid-state electrolyte includes $Na_3O(K3)$, where K3 includes one or more of Cl, Br, I, and $BH_4$.

The Hydride-type sodium-ion solid-state electrolyte includes $Na_2C_{(b1)}B_{(a1)-(b1)}H_{(b1)}$ and $Na(BH_4)_{0.5}(NH_2)_{0.5}$, and the like, where a1=10 or 12, b1=0 or 1.

The β-Alumina-type potassium-ion solid-state electrolyte includes $K_2O \cdot (8\text{-}11)Al_2O_3$.

The Anti-Perovskite-type potassium-ion solid-state electrolyte includes $K_3OI$.

The $K_2Fe_4O_7$-type solid-state electrolyte includes $K_2Fe_4O_7$.

The $KSi_2P_3$-type solid-state electrolyte includes $KSi_2P_3$.

Further, through the foregoing membrane design, the fracture toughness of the solid-state electrolyte membrane can be effectively improved. In some examples, the fracture toughness of the solid-state electrolyte membrane is greater than or equal to 0.25 megapascals square root meter ($MPa \cdot m^{1/2}$). Further, the fracture toughness of the solid-state electrolyte membrane is greater than or equal to 0.3 $MPa \cdot m^{1/2}$. Specifically, the fracture toughness of the solid-state electrolyte membrane includes, but is not limited to: 0.27 $MPa \cdot m^{1/2}$, 0.32 $MPa \cdot m^{1/2}$, 0.33 $MPa \cdot m^{1/2}$, 0.34 $MPa \cdot m^{1/2}$, 0.36 $MPa \cdot m^{1/2}$, 0.41 $MPa \cdot m^{1/2}$, 0.43 $MPa \cdot m^{1/2}$, 0.49 $MPa \cdot m^{1/2}$, 0.67 $MPa \cdot m^{1/2}$, and 0.87 $MPa \cdot m^{1/2}$. It can also be understood that fracture toughness is related to the type of solid-state electrolyte material. In some examples of this application, for example, when the inorganic ceramic solid-state electrolyte material includes a sulfide-based solid-state electrolyte material, the foregoing performance can be met, whereas when the solid-state electrolyte material is of other types, the fracture toughness may be less than 0.25 $MPa \cdot m^{1/2}$. For example, in some examples, the fracture toughness of the solid-state electrolyte membrane is greater than or equal to 0.05 $MPa \cdot m^{1/2}$. However, when the same solid-state electrolyte material is used, adopting the foregoing solutions of the examples of this application can improve the fracture toughness of the solid-state electrolyte membrane.

Through the foregoing membrane design, the thickness of the solid-state electrolyte membrane can be reduced, for example, to not exceed 200% of the thickness of the fiber material layer, thereby reducing surface resistance. In some examples, the surface resistance of the solid-state electrolyte membrane is less than or equal to 5 $\Omega \cdot cm^2$. Further, the surface resistance of the solid-state electrolyte membrane is less than or equal to 2 $\Omega \cdot cm^2$. Specifically, the surface resistance of the solid-state electrolyte membrane includes, but is not limited to: 0.73 $\Omega \cdot cm^2$, 0.76 $\Omega \cdot cm^2$, 0.78 $\Omega \cdot cm^2$, 0.87 $\Omega \cdot cm^2$, 0.93 $\Omega \cdot cm^2$, 1.07 $\Omega \cdot cm^2$, 1.13 $\Omega \cdot cm^2$, 1.21 $\Omega \cdot cm^2$, 1.37 $\Omega \cdot cm^2$, 2.34 $\Omega \cdot cm^2$, and 4.83 $\Omega \cdot cm^2$. It can also be understood that surface resistance is related to the type of solid-state electrolyte material. In some examples of this application, for example, when the inorganic ceramic solid-state electrolyte material includes a sulfide-based solid-state electrolyte material, the foregoing performance can be met, whereas when the solid-state electrolyte material is of other types, the surface resistance may exceed 5 $\Omega \cdot cm^2$. For example, in some examples, the surface resistance of the solid-state electrolyte membrane is less than or equal to 50 $\Omega \cdot cm^2$. However, when the same solid-state electrolyte material is used, adopting the foregoing solutions of the examples of this application can reduce the surface resistance of the solid-state electrolyte membrane.

In some examples, the thickness of the solid-state electrolyte membrane is less than or equal to 80 micrometers (μm). Further, the thickness of the solid-state electrolyte membrane is less than or equal to 60 μm. Specifically, the thickness of the solid-state electrolyte membrane includes, but is not limited to: 40 μm, 45 μm, 50 μm, 60 μm, and 80 μm.

Some other examples of this application provide a method for preparing the foregoing solid-state electrolyte membrane, including the following steps:

> preparing the fiber material layer using ceramic fibers; and
> coating the inorganic ceramic solid-state electrolyte material onto a surface of the fiber material layer and filling the same into the gaps of the fiber material layer, followed by forming treatment to prepare the solid-state electrolyte membrane.

The preparation method for the foregoing solid-state electrolyte membrane directly uses the fiber material layer as a substrate, followed by coating and filling on the basis of the fiber material layer, forming a solid-state electrolyte membrane with an internal support structure in situ, thereby enhancing the mechanical properties of the solid-state electrolyte membrane. Moreover, this method eliminates the need to pre-mix the solid-state electrolyte and fiber material physically, simplifying the operation steps.

In some examples, the step of preparing the fiber material layer includes:

interlacing the ceramic fibers to form the fiber material layer.

This achieves higher mechanical strength while significantly reducing the film-forming thickness of the solid-state electrolyte membrane to lower the surface resistance and enhance the ionic conductivity of the membrane layer. It can be understood that "interlaced distribution" can be achieved by bonding the ceramic fibers together or by methods such as weaving.

In some examples, the ceramic fibers form a network structure. Further, the network structure is formed by weaving. By weaving, a better supporting effect can be achieved. It can be understood that the woven network structure is parallel to the surface of the solid-state electrolyte membrane for contacting an electrode plate.

In some examples, the step of preparing the solid-state electrolyte membrane includes:

mixing the inorganic ceramic solid-state electrolyte material with a binder and a solvent to prepare an electrolyte slurry;

or preparing an electrolyte powder using the inorganic ceramic solid-state electrolyte material; and

performing the coating and filling using the electrolyte slurry or the electrolyte powder.

It can be understood that the inorganic ceramic solid-state electrolyte material is generally in powder form with a certain fluidity. On one hand, it can be directly injected into the fiber material layer for coating and filling, and a binder may be added during the preparation of the electrolyte powder according to requirements. On the other hand, the inorganic ceramic solid-state electrolyte material can also be mixed with a solvent to form a slurry before being injected into the fiber material layer for coating and filling. The type of solvent is not particularly limited and may include, for example, one or more of toluene, p-xylene, o-xylene, m-xylene, trimethylbenzene, ethyl acetate, butyl butyrate, n-butyl ether, anisole, ethylene glycol dimethyl ether, ethylene glycol diethyl ether, and n-butane, with the amount being reasonably controlled according to the fluidity of the slurry.

In some examples, the binder includes one or more of nitrile rubber (Nitrile rubber, NBR), polyvinylidene fluoride (Polyvinylidene fluoride, PVDF), polytetrafluoroethylene (Polytetrafluoroethylene, PTFE), polyacrylic acid (Polyacrylic acid, PAA), polyvinyl alcohol (Polyvinyl alcohol, PVA), polyimide (Polyimide, PI), polyacrylonitrile (Polyacrylonitrile, PAN), polyurethane (Polyurethane, PU), carboxymethyl cellulose (Carboxymethylcellulose, CMC), cyclodextrin (Cyclodextrin, CD), sodium alginate (Sodium alginate, SA), polysaccharide (Polysaccharide), and styrene butadiene rubber (Styrene butadiene rubber, SBR), with the amount being reasonably controlled according to the forming of the solid-state electrolyte membrane.

In some examples, the forming treatment step includes one or both of drying and pressing. It can be understood that in the process of preparing the solid-state electrolyte membrane using the electrolyte slurry method, drying is required to remove the solvent, followed by pressing to densify the membrane layer. In the process of preparing the solid-state electrolyte membrane using the electrolyte powder, pressing can be directly applied to densify the membrane layer.

Further, the pressure of the pressing treatment is 10 megapascals (MPa) to 600 MPa.

In addition, the following describes a solid-state battery, a battery module, a battery pack, and an electric apparatus in this application with appropriate reference to the accompanying drawings.

An embodiment of this application provides a solid-state battery.

Generally, a solid-state battery includes a positive electrode plate, a negative electrode plate, and an electrolyte. During a charge and discharge process of the battery, active ions intercalate and deintercalate between the positive electrode plate and the negative electrode plate. The electrolyte conducts ions between the positive electrode plate and the negative electrode plate; and specifically, the electrolyte adopts the foregoing solid-state electrolyte layer.

The positive electrode plate includes a positive electrode current collector and a positive electrode active material layer disposed on at least one surface of the positive electrode current collector, and the positive electrode active material layer includes a positive electrode active material of the first aspect of this application.

As an example, the positive electrode current collector has two opposing surfaces in a thickness direction of the positive electrode current collector, and the positive electrode active material layer is disposed on either or both of the two opposing surfaces of the positive electrode current collector.

In some embodiments, the positive electrode current collector may be a metal foil or a composite current collector. For example, as a metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, and the like) on a polymer material substrate (for example, polypropylene (PP), polyethylene terephthalate (PET), polybutylene terephthalate (PBT), polystyrene (PS), polyethylene (PE), and the like).

In some embodiments, the positive electrode active material may be a positive electrode active material known in the art for use in batteries. As an example, the positive electrode active material may include at least one of the following materials: olivine-structured lithium-containing phosphates, lithium transition metal oxides, and respective modified compounds thereof. However, this application is not limited to these materials, and may alternatively use other conventional materials that can be used as positive electrode active materials for batteries. One of these positive electrode active materials may be used alone, or two or more of them may be used in combination. Examples of lithium transition metal oxides may include, but are not limited to, at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ ($NCM_{333}$ for short), $LiNi_{0.5}Co_{0.2}Mn_{0.3}O_2$ ($NCM_{523}$ for short), $LiNi_{0.5}Co_{0.25}Mn_{0.25}O_2$ ($NCM_{211}$ for short), $LiNi_{0.6}Co_{0.2}Mn_{0.2}O_2$ ($NCM_{622}$ for short), $LiNi_{0.8}Co_{0.1}Mn_{0.1}O_2$ ($NCM_{811}$ for short)), lithium nickel cobalt aluminum oxide (for example, $LiNi_{0.85}Co_{0.15}Al_{0.05}O_2$), and modified compounds thereof. Examples of olivine-structured lithium-containing phosphates may include, but are not limited to, at least one of lithium iron phosphate (for example, $LiFePO_4$ (LFP for short)), a composite material of lithium iron phosphate and carbon, lithium manganese phosphate (for example, $LiMnPO_4$), a composite material of lithium manganese phosphate and carbon, lithium manganese iron phosphate, and a composite material of lithium manganese iron phosphate and carbon.

In some embodiments, the positive electrode active material layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode active material layer further optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared as follows: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

The negative electrode plate includes a negative electrode current collector and a negative electrode active material layer disposed on at least one surface of the negative electrode current collector, and the negative electrode active material layer includes a negative electrode active material.

As an example, the negative electrode current collector has two opposing surfaces in a thickness direction of the negative electrode current collector, and the negative electrode active material layer is disposed on either or both of the two opposing surfaces of the negative electrode current collector.

In some embodiments, the negative electrode current collector may be a metal foil or a composite current collector. For example, as a metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, and the like) on a polymer material substrate (for example, polypropylene (PP), polyethylene terephthalate (PET), polybutylene terephthalate (PBT), polystyrene (PS), polyethylene (PE), and the like).

In some embodiments, the negative electrode active material may be a negative electrode active material known in the art for use in batteries. As an example, the negative electrode active material may include at least one of the following materials: lithium metal, lithium-containing alloys, lithium-containing composites, artificial graphite, natural graphite, soft carbon, hard carbon, silicon-based materials, tin-based materials, lithium titanate, and the like. The silicon-based material may be selected from at least one of elemental silicon, silicon-oxygen compounds, silicon-carbon composites, silicon-nitrogen composites, and silicon alloys. The tin-based material may be selected from at least one of elemental tin, tin-oxygen compounds, and tin alloys. However, this application is not limited to these materials, and may alternatively use other conventional materials that can be used as negative electrode active materials for batteries. One of these negative electrode active materials may be used alone, or two or more of them may be used in combination.

In some embodiments, the negative electrode active material layer further optionally includes a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode active material layer further optionally includes other additives, such as a thickener (for example, sodium carboxymethyl cellulose (CMC-Na)).

In some embodiments, the negative electrode plate may be prepared as follows: the constituents used for preparing the foregoing negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

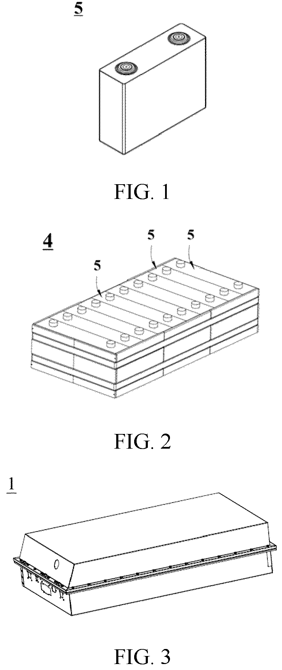

The solid-state battery is not limited to any particular shape in the embodiments of this application, and the solid-state battery may be cylindrical, rectangular, or of any other shapes. For example, FIG. 1 shows a solid-state battery 5 of a rectangular structure as an example.

In some embodiments, the solid-state battery can be assembled into a battery module, and the battery module may include one or more solid-state batteries. A specific quantity may be chosen by persons skilled in the art based on use and capacity of the battery module.

FIG. 2 shows a battery module 4 as an example. Referring to FIG. 2, in the battery module 4, a plurality of solid-state batteries 5 may be sequentially arranged in a length direction of the battery module 4. Certainly, the batteries may alternatively be arranged in any other manners. Further, the plurality of solid-state batteries 5 may be fastened by fasteners.

Optionally, the battery module 4 may further include a housing with an accommodating space, and the plurality of solid-state batteries 5 are accommodated in the accommodating space.

In some embodiments, the foregoing battery module can also be assembled into a battery pack, and the battery pack may include one or more battery modules. A specific quantity may be chosen by persons skilled in the art according to use and capacity of the battery pack.

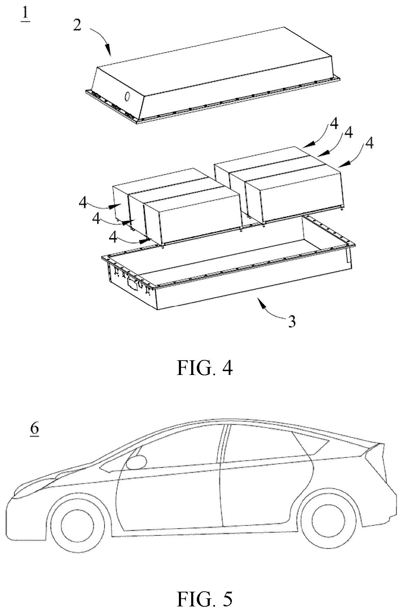

FIG. 3 and FIG. 4 show a battery pack 1 as an example. Referring to FIG. 3 and FIG. 4, the battery pack 1 may include a battery box and a plurality of battery modules 4 arranged in the battery box. The battery box includes an upper box body 2 and a lower box body 3, where the upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the solid-state battery, battery module, or battery pack provided by this application. The solid-state battery, battery module, or battery pack may be used as a power source for the electric apparatus, or as an energy storage unit for the electric apparatus. The electric apparatus may include a mobile device, an electric vehicle, an electric trains, ship, a satellite system, and an energy storage system, and the like, but is not limited thereto. The mobile device may be, for example, a mobile phone or a notebook computer; and the electric vehicle may be, for example, a battery electric vehicle, a hybrid electric vehicle, a plug-in hybrid electric vehicle, an electric bicycle, an electric scooter, an electric golf vehicle, or an electric truck, but is not limited thereto.

The solid-state battery, the battery module, or the battery pack may be selected for the electric apparatus according to requirements for using the electric apparatus.

FIG. 5 shows an electric apparatus 6 as an example. This electric apparatus is a battery electric vehicle, a hybrid electric vehicle, a plug-in hybrid electric vehicle, or the like. To meet a requirement of the electric apparatus for high power and high energy density of the solid-state battery, a battery pack or a battery module may be used.

As another example, the apparatus may be a mobile phone, a tablet computer, a notebook computer, or the like. Such apparatus is usually required to be light and thin, for which the solid-state battery may be used as a power source.

The following describes embodiments of this application. The examples described below are illustrative and merely used for explaining this application, and cannot be construed as limitations on this application. Examples whose technical solutions or conditions are not specified are made in accordance with technical solutions or conditions described in literature in the field or made in accordance with product instructions. Reagents or instruments used without indicating the manufacturer are conventional products available commercially.

Example 1

(1) $Li_6PS_5Cl$ solid-state electrolyte powder, NBR binder, and p-xylene were mixed at a mass ratio of 44.1:0.9:55, and mixed using a planetary ball mill at 200 rpm for 2 h to ensure thorough mixing, preparing a slurry;

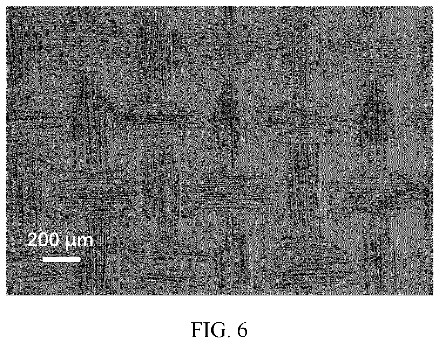

(2) $Al_2O_3$ fibers (aspect ratio of 20) were woven into a substrate layer with a thickness of 30 $\mu$m and a surface porosity of 50%, the structure of which is shown in FIG. 6 (in FIG. 6, the solid-state electrolyte material on a surface of the prepared solid-state electrolyte membrane was peeled off to expose the substrate layer). After fixing the $Al_2O_3$ substrate layer, the slurry prepared in step (1) was coated in a dry environment using a flatbed coater with a 75 $\mu$m doctor blade. During coating, based on the fluidity of the slurry, the slurry quickly entered the gaps of the substrate layer, filling and coating the substrate layer so that the substrate layer was not exposed; and

(3) the electrolyte membrane coated in step (2) was dried in a vacuum environment and densified by pressing using a flatbed press at a pressure of 500 MPa, forming a solid-state electrolyte membrane with a thickness of 50 $\mu$m.

In examples 2 to 11 and comparative example 1, the surface porosity of the substrate layer, the type of fibers, and the type of solid-state electrolyte material were changed based on example 1, while the remaining steps were the same as in Example 1, as specifically shown in Table 1.

In comparative example 2, based on example 1, did not involve the preparation of a substrate layer; instead, the slurry from step (1) was directly coated onto a PET film, dried, and densified by pressing to form a self-supporting solid-state electrolyte membrane.

The solid-state electrolytes prepared in the examples and comparative examples were tested for surface resistance and fracture toughness, with the results shown in Table 1.

Table 1

| | Fiber type of substrate layer | Surface porosity of substrate layer | Solid-state electrolyte material | Thickness of solid-state electrolyte membrane /$\mu$m | Surface resistance /$\Omega \cdot cm^2$ | Fracture toughness /MPa·m$^{1/2}$ |
|---|---|---|---|---|---|---|
| Example 1 | Al$_2$O$_3$ fibers | 70% | Li$_6$PS$_5$Cl | 50 | 0.76 | 0.41 |
| Example 2 | SiO$_2$ fibers | 70% | Li$_6$PS$_5$Cl | 50 | 1.07 | 0.33 |
| Example 3 | Boron nitride fibers | 70% | Li$_6$PS$_5$Cl | 50 | 1.21 | 0.32 |
| Example 4 | Silicon carbide fibers | 70% | Li$_6$PS$_5$Cl | 50 | 0.93 | 0.36 |
| Example 5 | Silicon nitride fibers | 70% | Li$_6$PS$_5$Cl | 50 | 1.13 | 0.34 |
| Example 6 | Al$_2$O$_3$ fibers | 75% | Li$_6$PS$_5$Cl | 60 | 0.87 | 0.36 |
| Example 7 | Al$_2$O$_3$ fibers | 65% | Li$_6$PS$_5$Cl | 45 | 0.78 | 0.43 |
| Example 8 | Al$_2$O$_3$ fibers | 50% | Li$_6$PS$_5$Cl | 40 | 1.37 | 0.49 |
| Example 9 | Al$_2$O$_3$ fibers | 90% | Li$_6$PS$_5$Cl | 80 | 0.73 | 0.27 |
| Example 10 | Al$_2$O$_3$ fibers | 70% | Na$_3$PS$_4$ | 50 | 2.34 | 0.67 |
| Example 11 | Al$_2$O$_3$ fibers | 70% | KSi$_2$P$_3$ | 50 | 4.83 | 0.87 |
| Comparative Example 1 | Polyoxyethylene fibers (PEO) | 70% | Li$_6$PS$_5$Cl | 50 | 0.71 | 0.18 |
| Comparative Example 2 | / | / | Li$_6$PS$_5$Cl | 200 | 5.28 | 0.21 |

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other forms constructed by combining some of the constituent elements in the embodiments are also included in the scope of this application.

**Claims**

1.  A solid-state electrolyte membrane, comprising a solid-state electrolyte material layer and a fiber material layer disposed within the solid-state electrolyte material layer, wherein the solid-state electrolyte material layer comprises an inorganic ceramic solid-state electrolyte material, and the fiber material layer comprises ceramic fibers; the ceramic fibers form a network structure, and the network structure is formed by weaving.

2.  The solid-state electrolyte membrane according to claim 1, wherein the network structure is parallel to a surface of the solid-state electrolyte membrane for contacting an electrode plate.

3.  The solid-state electrolyte membrane according to claim 1 or 2, wherein a surface porosity of the fiber material layer is 50% to 90%.

4.  The solid-state electrolyte membrane according to claim 3, wherein the surface porosity of the fiber material layer is 65% to 75%.

5.  The solid-state electrolyte membrane according to any one of claims 1 to 4, wherein the ceramic fibers comprise one or more of silicon carbide fibers, silicon nitride fibers, boron nitride fibers, aluminum oxide fibers, and silicon dioxide fibers.

6. The solid-state electrolyte membrane according to any one of claims 1 to 5, wherein an aspect ratio of the ceramic fibers is greater than or equal to 5.

7. The solid-state electrolyte membrane according to claim 6, wherein the aspect ratio of the ceramic fibers is 5 to 100.

8. The solid-state electrolyte membrane according to any one of claims 1 to 7, wherein the inorganic ceramic solid-state electrolyte material comprises a lithium-ion solid-state electrolyte material, a sodium-ion solid-state electrolyte material, or a potassium-ion solid-state electrolyte material.

9. The solid-state electrolyte membrane according to any one of claims 1 to 8, wherein the solid-state electrolyte membrane has one or more of the following features shown in (1) to (3):

   (1) A fracture toughness of the solid-state electrolyte membrane is greater than or equal to $0.25$ MPa·m$^{1/2}$;
   (2) a surface resistance of the solid-state electrolyte membrane is less than or equal to 5 $\Omega$·cm$^2$; and
   (3) a thickness of the solid-state electrolyte membrane is less than or equal to 80 $\mu$m.

10. The solid-state electrolyte membrane according to claim 9, wherein the solid-state electrolyte membrane has one or more of the following features shown in (1) to (3):

   (1) The fracture toughness of the solid-state electrolyte membrane is greater than or equal to $0.3$ MPa·m$^{1/2}$;
   (2) the surface resistance of the solid-state electrolyte membrane is less than or equal to 2 $\Omega$·cm$^2$; and
   (3) the thickness of the solid-state electrolyte membrane is less than or equal to 60 $\mu$m.

11. A method for preparing the solid-state electrolyte membrane according to any one of claims 1 to 10, comprising the following steps:

   preparing the fiber material layer using ceramic fibers, wherein the ceramic fibers form a network structure, and the network structure is formed by weaving; and
   coating the inorganic ceramic solid-state electrolyte material onto a surface of the fiber material layer and filling the same into the gaps of the fiber material layer, followed by forming treatment to prepare the solid-state electrolyte membrane.

12. The method for preparing the solid-state electrolyte membrane according to claim 11, wherein the step of preparing the solid-state electrolyte membrane comprises:

   mixing the inorganic ceramic solid-state electrolyte material with a binder and a solvent to prepare an electrolyte slurry; or preparing an electrolyte powder using the inorganic ceramic solid-state electrolyte material; and
   performing the coating and filling using the electrolyte slurry or the electrolyte powder.

13. The method for preparing the solid-state electrolyte membrane according to claim 12, wherein the binder comprises one or more of nitrile rubber, polyvinylidene fluoride, polytetrafluoroethylene, polyacrylic acid, polyvinyl alcohol, polyimide, polyacrylonitrile, polyurethane, carboxymethyl cellulose, cyclodextrin, sodium alginate, polysaccharide, and styrene butadiene rubber.

14. The method for preparing the solid-state electrolyte membrane according to any one of claims 11 to 13, wherein the forming treatment step comprises one or both of drying and pressing.

15. The method for preparing the solid-state electrolyte membrane according to claim 14, wherein the pressure of the pressing treatment is 10 MPa to 600 MPa.

16. A solid-state battery, comprising the solid-state electrolyte membrane according to any one of claims 1 to 10.

17. An electric apparatus, comprising the solid-state battery according to claim 16.

FIG. 1

FIG. 2

FIG. 3

FIG. 4

FIG. 5

FIG. 6

## INTERNATIONAL SEARCH REPORT

| International application No. |
| --- |
| **PCT/CN2023/138094** |

**A. CLASSIFICATION OF SUBJECT MATTER**

H01M10/0562(2010.01)i; H01M10/052(2010.01)i; H01M10/056(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 固态电解质, 无机, 陶瓷, 纤维, 网, 包覆, 浸, 静电纺丝, 编织, 韧性, 碳化硅, 氮化硅, 氮化硼, 氧化铝, 二氧化硅, solid, electrolyte, inorganic, ceramic, fibre, grid, net, braid, electrospin, coat

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116207339 A (JIANGSU CONTEMPORARY AMPEREX TECHNOLOGY LTD.) 02 June 2023 (2023-06-02)<br>description, paragraphs [0004]-[0113] | 1-17 |
| X | WO 2019208347 A1 (FUJIFILM CORP.) 31 October 2019 (2019-10-31)<br>description, paragraphs [0005]-[0164] | 1-17 |
| X | CN 111712891 A (ROBERT BOSCH CO., LTD.) 25 September 2020 (2020-09-25)<br>description, paragraphs [0008]-[0055], and figures 1-4 | 1-17 |
| A | CN 115621561 A (SHENZHEN UNIVERSITY) 17 January 2023 (2023-01-17)<br>entire document | 1-17 |
| A | CN 116031478 A (ZHEJIANG SCI-TECH UNIVERSITY) 28 April 2023 (2023-04-28)<br>entire document | 1-17 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 February 2024** | **03 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

EP 4 621 904 A1

**INTERNATIONAL SEARCH REPORT**
Information on patent family members

International application No.

**PCT/CN2023/138094**

| Patent document cited in search report | | | Publication date (day/month/year) | Patent family member(s) | | | Publication date (day/month/year) |
|---|---|---|---|---|---|---|---|
| CN | 116207339 | A | 02 June 2023 | None | | | |
| WO | 2019208347 | A1 | 31 October 2019 | JPWO | 2019208347 | A1 | 13 May 2021 |
| | | | | JP | 7014900 | B2 | 01 February 2022 |
| CN | 111712891 | A | 25 September 2020 | US | 2020335818 | A1 | 22 October 2020 |
| | | | | WO | 2019121340 | A1 | 27 June 2019 |
| | | | | DE | 112018005861 | T5 | 03 September 2020 |
| CN | 115621561 | A | 17 January 2023 | None | | | |
| CN | 116031478 | A | 28 April 2023 | None | | | |

Form PCT/ISA/210 (patent family annex) (July 2022)

## EP 4 621 904 A1

**REFERENCES CITED IN THE DESCRIPTION**

**Patent documents cited in the description**

- CN 2023104857075